# EUROPEAN PATENT APPLICATION

(11) **EP 4 580 073 A1**
(43) Date of publication of application: **02.07.2025**
(21) Application number: 24223498.7
(22) Date of filing: 27.12.2024
(51) Int. Cl.: H04B 1/40, H04B 7/06, H04B 7/08

(54) **BATTERY MANAGEMENT SYSTEM, BATTERY PACK INCLUDING THE SAME, AND OPERATING METHOD OF BATTERY MANAGEMENT SYSTEM**

(30) Priority: 27.12.2023 KR 20230193229
(71) Applicant: SAMSUNG SDI CO., LTD., Yongin-si, Gyeonggi-do 17084 (KR)
(72) Inventor: Bae, Jin Cheol, Suwon-si, Gyeonggi-do 16678 (KR)
(74) Representative: Gulde & Partner

(57) **Abstract**

The present disclosure relates to a battery management system, a battery pack including the same, and an operating method of the battery management system, and is directed to providing a battery management system capable of always maintaining the performance of wireless communication at a certain level or higher in various environments, a battery pack including the same, and an operating method of the battery management system. To this end, the present disclosure provides a battery management system including a plurality of antennas, a communication module configured to perform communication using any one of the plurality of antennas, a switch configured to selectively connect any one of the plurality of antennas and the communication module, and a processor configured to detect reception sensitivity of the antenna connected to the switch and control the switch based on the reception sensitivity.

## Description

**FIELD** Aspects of embodiments of the present disclosure relate to a battery management system capable of always maintaining the performance of wireless communication at a certain level or higher in various environments, a battery pack including the same, and an operating method of the battery management system.

**BACKGROUND** Secondary batteries are batteries, which can be charged and discharged, unlike primary batteries, which cannot be re-charged. Low-capacity secondary batteries are used in small portable electronic devices such as smartphones, feature phones, laptop computers, digital cameras, and camcorders, and high-capacity secondary batteries are widely used as motor driving power sources, power storage batteries, and the like in hybrid vehicles, electric vehicles, and the like. Such secondary batteries include an electrode assembly composed of a positive electrode and a negative electrode, a case which accommodates the same, and an electrode terminal connected to the electrode assembly.

The above-described information disclosed in the background technology of this invention is only for improving understanding of the background of the present invention, and accordingly, can include information which does not constitute the related art.

### SUMMARY

Embodiments of the present disclosure provide a battery management system capable of always maintaining the performance of wireless communication at a certain level or higher in various environments, a battery pack including the same, and an operating method of the battery management system.

In embodiments, there is provided a battery management system comprising: a plurality of antennas; a communication module configured to perform communication using any one of the plurality of antennas; a switch configured to selectively connect any one of the plurality of antennas and the communication module; and a processor connected to the communication module and the switch, wherein the processor detects reception sensitivity of the antenna connected to the switch and controls the switch based on the reception sensitivity.

However, technical problems to be solved by the present invention are not limited to the above-described problems, and other problems, which are not mentioned, will be clearly understood by those skilled in the art from the description of the invention disclosed below.

According to an aspect of the present invention, there is provided a battery management system wherein an antenna to be used in wireless communication among a plurality of antennas is determined based on the reception sensitivity of the antenna or a packet delivery rate of a signal received through the antenna.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram illustrating a battery management system;
FIGS. 2 and 3 are diagrams illustrating an operating process of a switch;
FIG. 4 is a diagram illustrating an operating method of the battery management system;
FIG. 5 is a diagram illustrating another operating method of the battery management system;
FIG. 6 is a diagram illustrating a printed circuit board to which a pattern antenna is applied;
FIG. 7 is a diagram illustrating a printed circuit board to which a chip antenna is applied; and
FIG. 8 is a diagram illustrating a battery pack.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A rechargeable battery can be used as a battery module formed of a plurality of unit battery cells coupled in series and/or parallel to provide high energy density, for example, for driving a motor of a hybrid vehicle. That is, the battery module is formed by interconnecting the electrode terminals of a plurality of unit battery cells according to a power amount required to implement, for example, a high-power rechargeable battery for an electric vehicle. In order to configure a battery pack, one or more battery modules are mechanically and electrically integrated.

The battery pack includes a battery management system (BMS) configured to manage the battery pack. A battery management system (master BMS) provided in the battery pack performs wireless communication with a battery management system (slave BMS) provided in each of at least one battery module included in the battery pack to receive various types of data required for battery management or transmit arbitrary data to the battery module.

Meanwhile, when the battery pack is exposed to a noise environment, the reception sensitivity of an antenna provided in the master BMS or slave BMS can deteriorate, and accordingly, a problem in that the wireless communication between the master BMS and the slave BMS is not smoothly performed can occur.

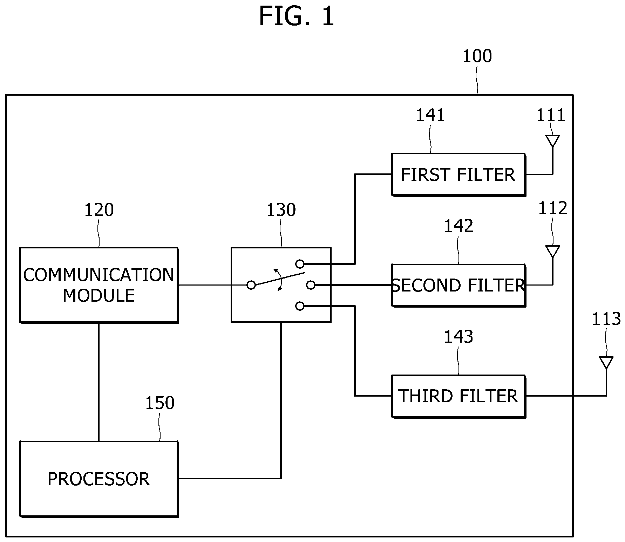

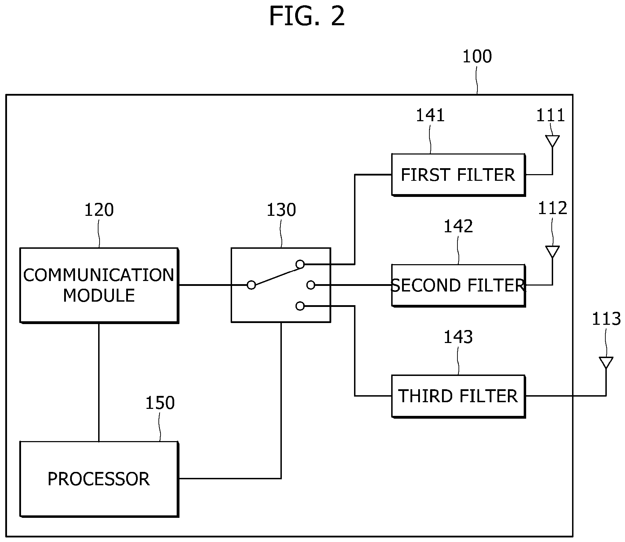

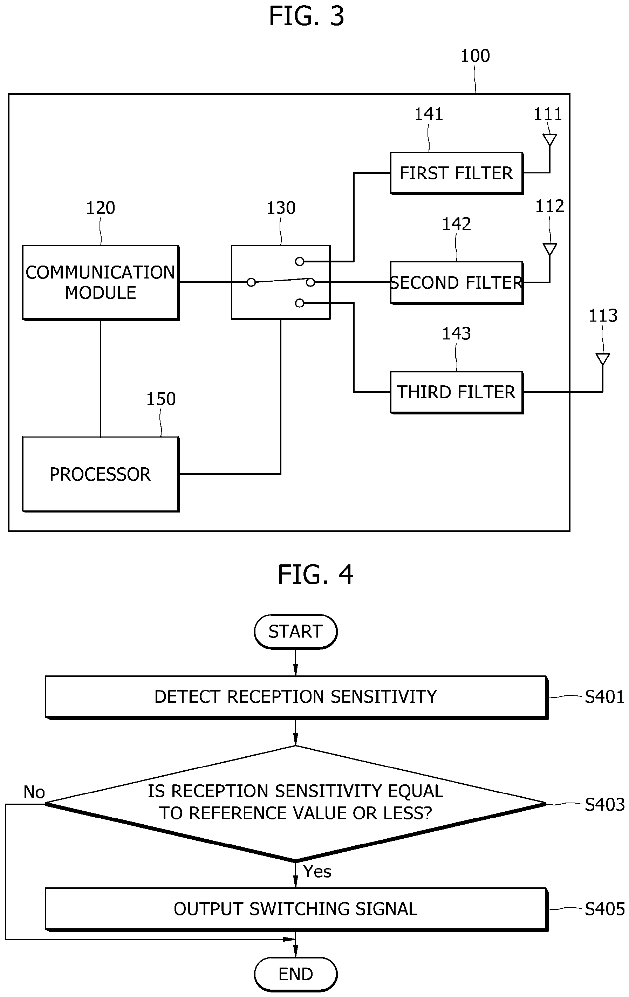

FIG. 1 illustrates a battery management system, and FIGS. 2 and 3 illustrate an operating process of a switch. Referring to FIG. 1, a battery management system (BMS) 100 may include a plurality of antennas 111 to 113, a communication module 120, a switch 130, a plurality of filters 141 to 143, a memory (not shown), and a processor 150. In various embodiments, the battery management system 100 may further include other components. The battery management system 100 in FIG. 1 may be a battery management system provided in a battery pack (for example, a master BMS). The battery management system 100 in FIG. 1 may be a battery management system provided in a battery module (for example, a slave BMS).

The antennas 111 to 113 may be used to transmit to an external device data generated by the battery management system 100 or receive data transmitted from the external device. The plurality of antennas 111 to 113 may include a first antenna 111, a second antenna 112, and a third antenna 113.

The first antenna 111 is a pattern antenna and may be formed on a printed circuit board of the battery management system 100. The pattern antenna may include a radiator composed of a conductive pattern. The second antenna 112 is a chip antenna and may be formed on the printed circuit board of the battery management system 100. The second antenna 112 may be mounted on the printed circuit board in the form of a chip. The chip antenna may be a bulk-type antenna or a low-temperature co-fired ceramic (LTCC)-type antenna. The chip antenna has an advantage of being relatively less affected by a direction of radio waves to be received unlike the pattern antenna whose communication performance varies according to the direction of radio waves to be received. The third antenna 113 is an external antenna and may be formed outside the battery management system 100. The third antenna 113 may be formed in various forms, such as a dipole antenna, a monopole antenna, a parabolic antenna, a helical antenna, and the like. A distance between the third antenna 113 and the filter 143 may be limited to within 200 mm, and the third antenna 113 may be connected to the filter 143 through a separate connector (for example, a JSC type connector).

The communication module 120 may communicate with an external device using one of the plurality of antennas 111 to 113. The communication module 120 may communicate with the external device using various communication methods. For example, the communication module 120 may communicate with the external device using radio frequency (RF) communication. The communication module 120 may include a communication processor which operates independently of the processor 150 and supports wired or wireless communication. The communication module 120 may include a transceiver, a power amp module (PAM), and a frequency filter. The communication module 120 may include a surface acoustic wave (SAW) filter or a bulk acoustic wave (BAW) filter. The communication module 120 may further include various elements or devices for supporting wireless communication.

The switch 130 may selectively connect any one of the plurality of antennas 111 to 113 and the communication module 120. The switch 130 may include a first contact point configured to be connected to the first antenna 111, a second contact point configured to be connected to the second antenna 112, and a third contact point configured to be connected to the third antenna 113. The switch 130 may selectively connect any one of the first to third contact points and the communication module 120. The switch 130 may be switched under the control of the processor 150.

For example, as shown in FIG. 2, when the first contact point is currently connected to the communication module 120 through the switch 130, the switch 130 may be switched as shown in FIG. 3 so that the second contact point may be connected to the communication module 120 when a switching signal is received from the processor 150. Further, when the second contact point is currently connected to the communication module 120 through the switch 130, the switch 130 may be switched so that the third contact point may be connected to the communication module 120 when a switching signal is received from the processor 150. In addition, when the third contact point is connected to the communication module 120 through the switch 130, the switch 130 may be switched so that the first contact point may be connected to the communication module 120 when a switching signal is received from the processor 150.

The switch 130 may output a feedback signal when the switch 130 is not connected to any one of the plurality of antennas 111 to 113. When the switch 130 is not connected to any of the contact points provided in the switch 130, the switch 130 may output a feedback signal. For example, the switch 130 may determine whether the switch 130 is connected to a contact point by checking whether the switch 130 is energized. To this end, a separate sensor (for example, a current sensor) may be applied to the switch 130. The feedback signal may be output to the processor 150.

Meanwhile, in embodiments, although it is described that the switch 130 determines whether the contact point is connected by itself, whether the contact point is connected may be determined by the processor 150 or the communication module 120.

The filters 141 to 143 may be connected between the antennas 111 to 113 and the switch 130, respectively. For example, the filters 141 to 143 may be band-pass filters. The filters 141 to 143 may remove frequency components other than preset frequency components. For example, assuming that the communication frequency of the antennas 111 to 113 is 2.4 GHz, the filters 141 to 143 may remove the remaining frequency components other than the 2.4 GHz band. The filters 141 to 143 may include at least one inductor and/or at least one capacitor. The antennas 111 to 113 may have different frequency characteristics according to types thereof. Accordingly, the inductance and/or capacitance components of the filters 141 to 143 may be set in consideration of the frequency characteristics of the antennas 111 to 113 connected to the filters 141 to 143, and accordingly, the inductance and/or capacitance of the filters 141 to 143 may be set differently.

The memory may store various types of information required in an operating process of the processor 150. Various types of information calculated in the operating process of the processor 150 may be stored in the memory.

At least one command executed by the processor 150 may be stored in the memory. This memory may be implemented as a volatile storage medium and/or a nonvolatile storage medium, and for example, may be implemented as a read only memory (ROM) and/or a random access memory (RAM).

The processor 150 may be operatively connected to the communication module 120, the switch 130, and the memory. The processor 150 may be implemented as a central processing unit (CPU) or a system on chip (SoC), may run an operating system or application to control a plurality of hardware or software components connected to the processor 150, and may perform various types of data processing and calculations. The processor 150 may be configured to execute at least one command stored in the memory and store execution result data in the memory.

The processor 150 may detect the reception sensitivity (dBm) of the antenna currently connected to the switch 130 (hereinafter, referred to as a target antenna). The processor 150 may detect the reception sensitivity of the target antenna by analyzing the signal received through the target antenna. Since a method of detecting the reception sensitivity of the antenna is known to those skilled in the art, a detailed description thereof will be omitted.

Meanwhile, in embodiments, although it is described that the reception sensitivity of the target antenna is detected by the processor 150, the reception sensitivity of the target antenna may be detected through the communication module 120 and transmitted to the processor 150.

The processor 150 may control the switch 130 based on the reception sensitivity of the target antenna. For example, when the reception sensitivity of the target antenna is a preset reference value or less, the processor 150 may output a switching signal to the switch 130 so that the switch 130 may be connected to another antenna. In embodiments, when the reception sensitivity of the antenna currently connected to the switch 130 is a predetermined value (for example, -92 dBm) or less, by allowing communication to be performed using another antenna, the performance of wireless communication may be always maintained at a certain level or higher in various environments.

The processor 150 may detect a packet delivery rate (PDR) of the signal received through the target antenna. The processor 150 may detect the packet delivery rate of the signal received through the target antenna by analyzing the signal received through the target antenna. Since a method of detecting the packet delivery rate is known to those skilled in the art, a detailed description thereof will be omitted.

The processor 150 may control the switch 130 based on the packet delivery rate of the signal received through the target antenna. For example, the processor 150 may output a switching signal to the switch 130 so that the switch 130 may be connected to another antenna when the packet delivery rate of the signal received through the target antenna is a preset reference value or less. In embodiments, as communication is performed using another antenna when the packet delivery rate of the signal received through the antenna currently connected to the switch 130 is a predetermined value (for example, 99%) or less, the performance of wireless communication may be always maintained at a certain level or higher in various environments.

Meanwhile, in embodiments, although it is described that the switch 130 is controlled based on the packet delivery rate of the signal received through the target antenna, the switch 130 may be controlled based on a packet loss rate instead of the packet delivery rate. In this case, the processor 150 may output a switching signal to the switch 130 so that the switch 130 may be connected to another antenna when the packet loss rate of the signal received through the target antenna is a preset reference value or more.

The processor 150 may detect the reception sensitivity for each of the plurality of antennas 111 to 113 and control the switch 130 based on the reception sensitivity for each of the plurality of antennas 111 to 113. For example, the processor 150 may detect the antenna having the highest reception sensitivity by comparing the reception sensitivity for each of the plurality of antennas 111 to 113 and control the switch 130 so that the detected antenna and the communication module 120 may be connected.

The processor 150 may detect the packet delivery rate for each of the plurality of antennas 111 to 113 and control the switch 130 based on the packet delivery rate for each of the plurality of antennas 111 to 113. For example, the processor 150 may detect the antenna having the highest packet delivery rate by comparing the packet delivery rate for each of the plurality of antennas 111 to 113 and control the switch 130 so that the detected antenna and the communication module 120 may be connected.

The processor 150 may detect the reception sensitivity and the packet delivery rate for each of the plurality of antennas 111 to 113 and control the switch 130 based on the reception sensitivity and the packet delivery rate for each of the plurality of antennas 111 to 113. For example, the processor 150 may repeatedly perform a process of calculating a sum of a first weight applied to the reception sensitivity and a second weight applied to the packet delivery rate for each of the plurality of antennas 111 to 113, may identify the antenna having the largest sum among the plurality of antennas 111 to 113 and control the switch 130 so that the identified antenna and the communication module 120 may be connected.

When no antenna among the plurality of antennas 111 to 113 is connected to the communication module 120, the processor 150 may output a switching signal to the switch through another communication path. That is, the processor 150 may output a switching signal to the switch 130 through a separately provided communication path when the switch 130 is not connected to any one contact point.

When a feedback signal is received from the switch 130, the processor 150 may determine that no antenna among the plurality of antennas 111 to 113 is connected to the communication module 120. However, a method of checking whether the plurality of antennas 111 to 113 and the communication module 120 are connected is not limited to the above-described embodiments, and various methods of checking whether the contact point is connected may be used to determine whether the plurality of antennas 111 to 113 and the communication module 120 are connected.

First and second communication paths may be formed between the processor 150 and the switch 130. The first communication path may be a communication path provided so that a switching signal generated according to the reception sensitivity or the packet delivery rate is transmitted. The second communication path may be a communication path provided so that a switching signal generated according to the feedback signal is transmitted.

FIG. 4 illustrates an operating method of the battery management system. Hereinafter, with reference to FIG. 4, the operating method of the battery management system will be described as a non-limiting example.

First, the processor 150 may detect the reception sensitivity of the antenna currently connected to the switch 130 (hereinafter, referred to as a target antenna) (S401). In operation S401, the processor 150 may detect the reception sensitivity of the target antenna by analyzing the signal received through the target antenna.

Subsequently, the processor 150 may determine whether the reception sensitivity of the target antenna is a preset reference value or less (S403). In operation S403, the processor 150 may check whether the reception sensitivity of the target antenna is the reference value or less by comparing the reception sensitivity detected in operation S401 and the reference value.

When the reception sensitivity of the target antenna is the reference value or less, the processor 150 may output a switching signal to the switch 130 so that the switch 130 may be connected to another antenna (S405). When the switching signal is received, the switch 130 may be switched, and accordingly, another antenna may be connected to the switch 130.

Meanwhile, when there is no antenna having a reception sensitivity exceeding the reference value, the processor 150 may identify the antenna having the highest reception sensitivity among the plurality of antennas 111 to 113 and control the switch 130 so that the switch 130 may be connected to the identified antenna.

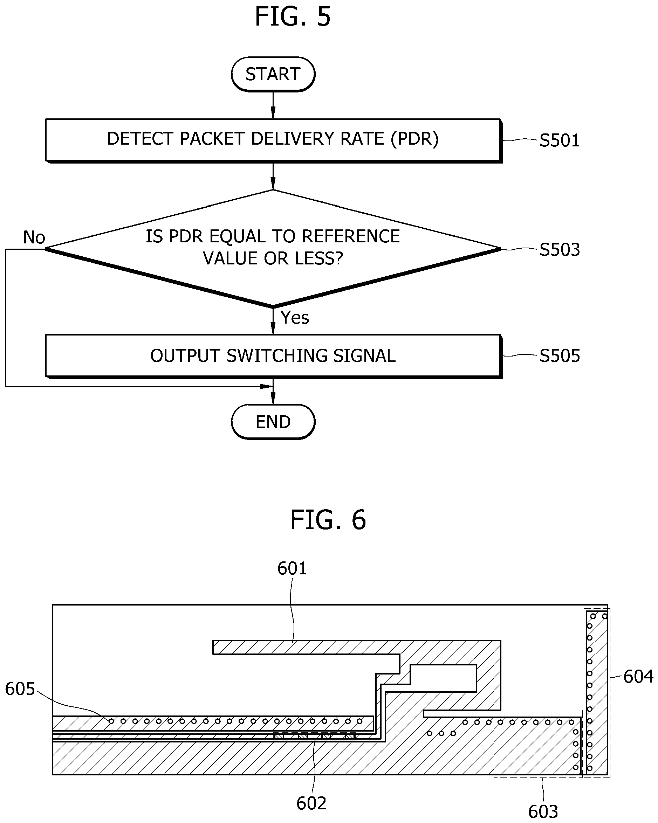

FIG. 5 illustrates another operating method of the battery management system. Hereinafter, with reference to FIG. 5, the operating method of the battery management system will be described as a non-limiting example.

First, the processor 150 may detect a packet delivery rate of a signal received through the antenna currently connected to the switch 130 (hereinafter, referred to as a target antenna) (S501). In operation S501, the processor 150 may detect the packet delivery rate of the signal received through the target antenna by analyzing the signal received through the target antenna.

Subsequently, the processor 150 may determine whether the packet delivery rate of the signal received through the target antenna is a preset reference value or less (S503). In operation S503, the processor 150 may check whether the packet delivery rate of the signal received through the target antenna is the reference value or less by comparing the packet delivery rate detected in operation S501 and the reference value.

When the packet delivery rate of the signal received through the target antenna is the reference value or less, the processor 150 may output to the switch 130a switching signal so that the switch 130 may be connected to another antenna (S505). When the switching signal is received, the switch 130 may be switched, and accordingly, another antenna may be connected to the switch 130.

Meanwhile, when there is no antenna having a packet delivery rate exceeding the reference value, the processor 150 may identify the antenna having the highest packet delivery rate among the plurality of antennas 111 to 113 and control the switch 130 so that the switch 130 may be connected to the identified antenna.

FIG. 6 illustrates a printed circuit board to which a pattern antenna is applied. Referring to FIG. 6, a printed circuit board 600 may include a pattern antenna 601, a filter 602, a first ground 603, and a second ground 604.

The pattern antenna 601 may be formed in at least one region of the printed circuit board 600. The pattern antenna 601 may include a radiator composed of a conductive pattern.

The filter 602 may be formed in at least one region of the printed circuit board 600. The filter 602 may be electrically connected to the pattern antenna 601. The filter 602 may be connected to the pattern antenna 601 through a conductive region. The filter 602 may include at least one inductor and/or at least one capacitor. For example, the filter 602 may be a PI-type filter.

The first ground 603 may be formed in at least one region of the printed circuit board 600. The first ground 603 may be a communication module ground. The first ground 603 may be formed at a position spaced apart from the pattern antenna 601. The second ground 604 may be formed in at least one region of the printed circuit board 600. The second ground 604 may be a power ground. The second ground 604 may be formed at a position spaced apart from the pattern antenna 601. In this way, the embodiment prevents the communication performance of the antenna from deteriorating due to the ground by preventing the formation of the ground immediately around the pattern antenna.

The printed circuit board 600 may include a plurality of via holes 605. The plurality of via holes 605 may be formed around the region where the pattern antenna 601 is formed and a region where the communication module is mounted, and may be disposed to be spaced apart from each other at predetermined intervals (for example, 1 mm).

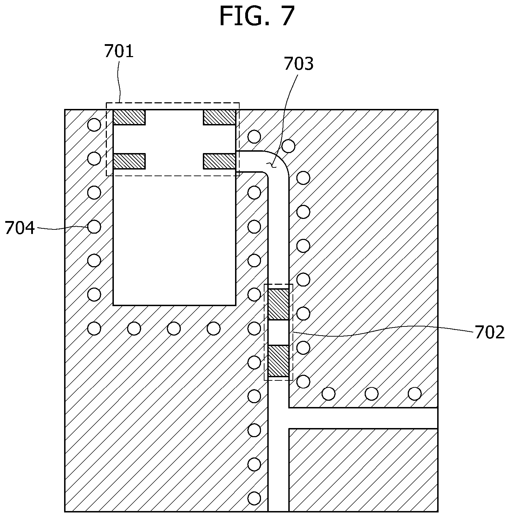

FIG. 7 illustrates a printed circuit board to which a chip antenna is applied. Referring to FIG. 7, a printed circuit board 700 may include a chip antenna 701, a filter 702, a conductive region 703, and a ground 704.

The chip antenna 701 may be formed in at least one region of the printed circuit board 700. The chip antenna 701 may be a bulk-type antenna or a low-temperature co-fired ceramic (LTCC)-type antenna.

The filter 702 may be formed in at least one region of the printed circuit board 700. The filter 702 may be electrically connected to the chip antenna 701. The filter 702 may be connected to the chip antenna 701 through the conductive region 703. The filter 702 may include at least one inductor and/or at least one capacitor. For example, the filter 702 may be a PI-type filter.

The ground 704 may be formed in at least one region of the printed circuit board 700. The ground 704 may be formed at a position spaced apart from the chip antenna 701. In this way, the embodiment prevents the communication performance of the antenna from deteriorating due to the ground by preventing the formation of the ground immediately around the chip antenna.

The printed circuit board 700 may include a plurality of via holes 705. The plurality of via holes 705 may be formed around the region where the chip antenna 701 is mounted and a region where the communication module is mounted, and may be disposed to be spaced apart from each other at predetermined intervals (for example, 1 mm).

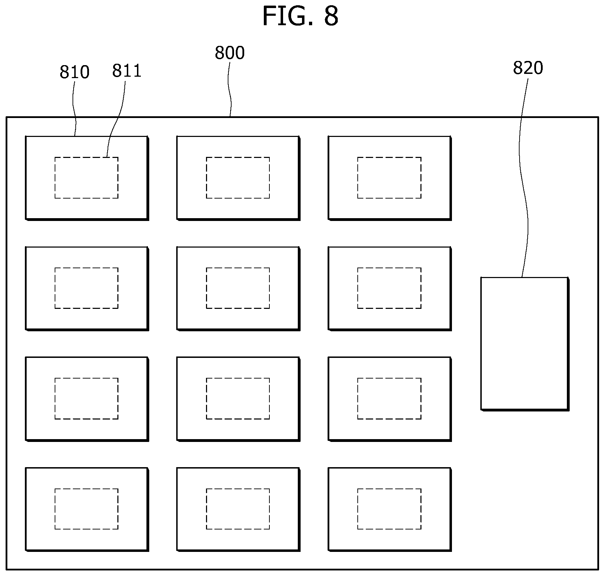

FIG. 8 illustrates a battery pack. Referring to FIG. 8, a battery pack 800 may include at least one battery module 810 and a battery management system 820. The battery pack 800 may include a pack housing in which an accommodation space which accommodates at least one battery module 810 therein is formed. Of course, in various embodiments, the battery pack 800 may further include other components.

The battery module 810 may include a plurality of battery cells and a module housing. The battery module 810 may include a plurality of battery cells connected to each other in series or parallel. The battery modules 810 may be connected to each other in series or parallel.

Battery cells may be accommodated in the module housing in a stacked form. The battery cell may include a positive electrode lead and a negative electrode lead. Depending on the battery type, round-type, prismatic-type, or pouch-type battery cells may be used.

Instead of the battery module 810, one cell stack may form one module. The cell stack may be accommodated in the accommodation space of the pack housing or may be accommodated in an accommodation space partitioned by a frame, a partition wall, or the like.

Battery cells generate a large amount of heat during charging/discharging. The generated heat is accumulated in the battery cells and accelerates the deterioration of the battery cells. Accordingly, the battery pack 800 may further include a cooling member to suppress battery cell deterioration. The cooling member is provided at the bottom of the accommodation space where the battery cells are provided, but is not limited thereto, and may be provided on or at a side surface according to the battery pack 800.

An exhaust gas in the battery cell generated in an abnormal operating condition, also known as thermal runaway or a thermal event of the battery cell, may be discharged to the outside of the battery cell. Each of the battery pack 800 or the battery module 810 may include an exhaust port for discharging exhaust gas to prevent damage to the battery pack 800 or module.

The battery module 810 may include a battery module management system 811. The battery module management system 811 may correspond to a slave BMS. The battery module management system 811 may manage the battery module 810. The battery module management system 811 may detect the state (a voltage, a current, a temperature, and the like) of the battery module 810 and detect state information indicating the state of the battery module 810. The battery module management system 811 may detect the state (a voltage, a current, a temperature, and the like) of each battery cell constituting the battery module 810 and detect state information indicating the state of each battery cell.

The battery module management system 811 may communicate with the battery management system 820 in a wireless and/or wired manner. The battery module management system 811 may receive and process data transmitted from the battery management system 820. The battery module management system 811 may transmit data to the battery management system 820.

The battery module management system 811 may include a plurality of antennas, a communication module configured to perform communication using any one of the plurality of antennas, a switch which selectively connects the communication module and one of the plurality of antennas, and a processor which controls the switch based on the reception sensitivity of the antenna connected to the switch and/or a packet delivery rate of a signal received through the antenna connected to the switch.

The battery management system 820 may manage the battery pack 800. The battery management system may correspond to a master BMS. The battery management system 820 may detect the state (a voltage, a current, a temperature, and the like) of the battery pack 800 and detect state information indicating the state of the battery pack 800. The battery management system 820 may detect the state (a voltage, a current, a temperature, and the like) of each battery module 810 constituting the battery pack 800 and detect state information indicating the state of each battery module 810.

The battery management system 820 may communicate with the battery module management system 811 included in each battery module 810 in a wireless and/or wired manner. The battery management system 820 may receive and process data transmitted from each battery module management system 811. The battery management system 820 may transmit to the battery module management system 811 data. The battery management system 820 may communicate with an external device in a wireless and/or wired manner.

The battery management system 820 may include a plurality of antennas, a communication module configured to perform communication using any one of the plurality of antennas, a switch which selectively connects the communication module and one of the plurality of antennas, and a processor which controls the switch based on the reception sensitivity of the antenna connected to the switch and/or a packet delivery rate of a signal received through the antenna connected to the switch.

As described above, according to the present disclosure, when the reception sensitivity of the antenna or the packet delivery rate of the signal received through the antenna exceeds a preset standard value, as another antenna is used for communication, the performance of wireless communication may be maintained at a certain level or higher in various environments.

Implementations described in the present specification may be implemented as, for example, as a method or process, device, software program, data stream, or signal. Although only the context of a singular form of implementation is discussed (for example, only a method is discussed), implementations of discussed features may also be implemented in another form (for example, a device or program). The device may be implemented with appropriate hardware, software, firmware, and the like. The method may be implemented in devices such as processors, which generally refer to processing devices that include computers, microprocessors, integrated circuits, programmable logic devices, or the like. Further, the processors include communication devices such as computers, cellular phones, portable/personal digital assistants (PDAs), other devices, etc. that facilitate the communication of information between end-users.

According to one aspect of the present disclosure, when the reception sensitivity of an antenna or a packet delivery rate of a signal received through the antenna exceeds a preset standard value, as another antenna is used for communication, the performance of wireless communication can be maintained at a certain level or higher in various environments.

However, effects, which can be acquired through the present disclosure, are not limited to the above-described effects, and other technical effects, which are not mentioned, will be clearly understood by those skilled in the art from the description of the disclosure.

Although the present disclosure has been described with reference to the embodiments shown in the drawings, these are merely exemplary, and it should be understood by those skilled in the art that various modifications and equivalents are possible. Accordingly, the technical scope of the present disclosure should be defined by the following claims.

## Claims

1. A battery management system (100, 820) comprising:
a plurality of antennas;
a communication module (120) configured to perform communication using any one of the plurality of antennas;
a switch (130, 130a) configured to selectively connect any one of the plurality of antennas and the communication module (120); and
a processor (150) connected to the communication module (120) and the switch (130, 130a),
wherein the processor (150) detects reception sensitivity of the antenna connected to the switch (130, 130a) and controls the switch (130, 130a) based on the reception sensitivity.

2. The battery management system (100, 820) of claim 1, wherein the processor (150) outputs to the switch (130, 130a) a switching signal so that the switch (130, 130a) is connected to another antenna when the reception sensitivity is a preset reference value or less.

3. The battery management system (100, 820) of claim 1 or 2, wherein the processor (150) detects a packet delivery rate of a signal received through the antenna connected to the switch (130, 130a), and controls the switch (130, 130a) based on the packet delivery rate.

4. The battery management system (100, 820) of claim 3, wherein the processor (150) outputs to the switch (130, 130a) a switching signal so that the switch (130, 130a) is connected to another antenna when the packet delivery rate is a preset reference value or less.

5. The battery management system (100, 820) of claims 1 to 4, wherein the plurality of antennas include first to third antennas (113),
wherein the first antenna (111) is a pattern antenna (601),
the second antenna (112) is a chip antenna (701), and
the third antenna (113) is an external antenna.

6. The battery management system (100, 820) of claims 1 to 5, further comprising a plurality of band-pass filters (141, 143, 602, 702) respectively connected to the plurality of antennas.

7. The battery management system (100, 820) of claims 1 to 6, wherein the processor (150) outputs to the switch (130, 130a) a switching signal through another communication path when the communication module (120) is not connected to any one of the plurality of antennas.

8. The battery management system (100, 820) of claim 7, wherein the switch (130, 130a) is configured to output a feedback signal to the processor (150) when the switch (130, 130a) is not connected to any one of the plurality of antennas, and
the processor (150) determines that the communication module (120) is not connected to any one of the plurality of antennas when the feedback signal is received.

9. An operating method of a battery management system (100, 820) comprising:
detecting reception sensitivity of an antenna connected to a switch (130, 130a) configured to selectively connect any one of a plurality of antennas and a communication module (120) configured to perform communication using any one of the plurality of antennas; and
controlling the switch (130, 130a) based on the reception sensitivity.

10. The operating method of claim 9, wherein, in the controlling of the switch (130, 130a) based on the reception sensitivity, a switching signal is output to the switch (130, 130a) so that the switch (130, 130a) is connected to another antenna when the reception sensitivity is a preset reference value or less.

11. A battery pack (800) comprising:
at least one battery module (810);
a battery module management system (811) provided in the battery module (810); and
a battery management system (100, 820) configured to communicate with the battery module management system (811),
wherein the battery module management system (811) and the battery management system (100, 820) include a plurality of antennas, a communication module (120) configured to perform communication using any one of the plurality of antennas, a switch (130, 130a) configured to selectively connect any one of the plurality of antennas and the communication module (120), and a processor (150) connected to the communication module (120) and the switch (130, 130a),
wherein the processor (150) detects reception sensitivity of the antenna connected to the switch (130, 130a) and controls the switch (130, 130a) based on the reception sensitivity.

12. The battery pack (800) of claim 11, wherein the processor (150) outputs to the switch (130, 130a) a switching signal so that the switch (130, 130a) is connected to another antenna when the reception sensitivity is a preset reference value or less.

13. The battery pack (800) of claim 11 or 12, wherein the processor (150) detects a packet delivery rate of a signal received through the antenna connected to the switch (130, 130a) and controls the switch (130, 130a) based on the packet delivery rate.

14. The battery pack (800) of claim 13, wherein the processor (150) outputs to the switch (130, 130a) a switching signal so that the switch (130, 130a) is connected to another antenna when the packet delivery rate is a preset reference value or less.

15. The battery pack (800) of claims 11 to 14, wherein the plurality of antennas include first to third antennas (113),
wherein the first antenna (111) is a pattern antenna (601),
the second antenna (112) is a chip antenna (701), and
the third antenna (113) is an external antenna.
